(19) Europäisches Patentamt
European Patent Office
Office européen des brevets

(11) **EP 0 909 533 A2**

(12) **EUROPÄISCHE PATENTANMELDUNG**

(43) Veröffentlichungstag:
21.04.1999 Patentblatt 1999/16

(51) Int. Cl.$^6$: **A21B 1/26**, A21B 1/40

(21) Anmeldenummer: 98117071.5

(22) Anmeldetag: 09.09.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 15.10.1997 DE 19745515

(71) Anmelder:
**Werner & Pfleiderer Lebensmitteltechnik GmbH**
**91550 Dinkelsbühl (DE)**

(72) Erfinder: **Wagemann, Kurt**
**91550 Dinkelsbühl (DE)**

(74) Vertreter:
**Schneck, Herbert, Dipl.-Phys., Dr. et al**
**Rau, Schneck & Hübner**
**Patentanwälte**
**Königstrasse 2**
**90402 Nürnberg (DE)**

(54) **Backofen, insbesondere Backschrank, mit geregelter Luftumwälzung**

(57) Bei einem Backofen, insbesondere einem Backschrank, bei welchem im Backraum mittels eines durch einen Elektromotor angetriebenen Lüfters Luft geregelt umgewälzt wird, ist zur Erzielung einer weniger störanfälligen, den Aufheizvorgang optimierenden Regelung vorgesehen, daß die von dem Lüfter-Elektromotor (8) aufgebrachte Leistung erfaßt und zur Regelung der Luftumwälzung herangezogen wird.

FIG.1

EP 0 909 533 A2

**Beschreibung**

Die Erfindung richtet sich auf einen Backofen, insbesondere einen Backschrank, bei welchem im Backraum mittels eines durch einen Elektromotor angetriebenen Lüfters Luft geregelt umgewälzt wird.

Bei Backschränken der in Betracht stehenden Art sind einerseits Schwadenapparate zur Bereitstellung von Dampf vorgesehen, die den Schwaden in die Backkammer leiten und verteilen. Darüber hinaus sind Heißlufteintrittsschlitze vorgesehen, durch die neben der Heißluft auch der Dampf in die Backkammer eintritt. Für eine gleichmäßige Verteilung des Dampfes sorgt eine zwangsgeführte Strömung für die Absaugung unten im Backraum. Temperaturfühler sorgen für eine gleichmäßige Temperatur im Backraum.

Herkömmlicherweise wird die Luftumwälzung, also die Zuführung der Heißluft und die Abführung der Luft, mittels Druckfühler überwacht, welche jedoch sehr störanfällig sind.

Ein weiterer Nachteil der herkömmlichen Drucküberwachung resultiert daraus, daß in Backschränken große Druckunterschiede auftreten, welche bedingt sind durch die Schwadungsvorgänge, also die Dampferzeugung im Ofen, Entschwadung oder durch das Öffnen und Schließen der Ofentür, wodurch jeweils der Schaltkontakt der herkömmlichen Druckfühler kurzzeitig unterbrochen wird, der im Sicherheitskreis der Brennerregelung eingebaut ist. Dies führt dazu, daß auch der Brenner ausgeschaltet wird. Der Neustart des Brenners dauert einige Minuten, so daß die Temperatur unzulässig stark abfällt, wenn eine Neubeschickung vorgenommen wird, wobei sich zudem die Masse des kalten Backwagens mit Backgut auswirkt. Da Backwaren gerade bei Beginn der Backphase die meiste Hitze benötigen, führt dies zu einem erheblichen Qualitätsverlust.

Hiervon ausgehend liegt der Erfindung die Aufgabe zugrunde, einen Backofen der eingangs genannten Art so auszugestalten, daß eine exakt geregelte Zuführung der Heißluft bei geringer Störanfälligkeit erzielt wird.

Diese Aufgabe wird erfindungsgemäß dadurch gelöst, daß die von dem Lüfter-Elektromotor aufgebrachte Leistung erfaßt und zur Regelung der Luftumwälzung herangezogen wird, insbesondere indem die Phasenverschiebung zwischen Strom und Spannung des Elektromotors erfaßt wird.

Es ist an sich bekannt, diese Phasenverschiebung, den sogenannten cos $\varphi$, zu messen, um auf diese Weise einen Motorschutz zu realisieren und den Motor bei Überlast abzuschalten. Insoweit gibt es auch kommerziell verfügbare Belastungswächter. Man macht sich dabei die Erkenntnis zunutze, daß bei induktiver Last der Strom der Spannung um einen Phasenwinkel $\varphi$ nacheilt. Bei sinkender Belastung des Motors wird der Phasenwinkel größer und damit der cos $\varphi$ kleiner. Diese Phasenwinkeländerung ist ein sehr brauchbares Maß für die Belastungsänderung an der Welle des Motors. Damit eine derartige Überwachung der Phasenverschiebung möglich ist, muß ein Motor verwendet werden, der im sinusförmigen Wechsel- bzw. Drehstromnetz arbeitet, wohingegen dieses Verfahren für Phasenanschnittsteuerung und frequenzgeregelte Motoren nicht geeignet ist.

Erfindungsgemäß ist eine derartige Überwachung des Motors vorgesehen, nicht um in herkömmlicher Weise einen Überlastschutz zu realisieren, sondern davon ausgehend, daß der Motor um so stärker belastet wird, je größer der Druck der Heißluft im Backraum ist, so daß also die Motorbelastung mittelbar auch eine Druckmessung im Backraum und damit eine Regelung des Drucks bzw. der Luftumwälzung ermöglicht.

Durch die erfindungsgemäß vorgesehene cos $\varphi$-Überwachung ist es möglich, nicht nur den Druck als solchen zu erfassen, sondern auch den korrekten Anschluß des Lüfters, einen möglichen Defekt des Lüfterrades und einen Phasenausfall.

In jedem Fall ist gewährleistet, daß im Ofen eine Luftumwälzung vorhanden ist und der Heizungssicherheitskreis nicht ungewollt unterbrochen und somit der Brenner abgeschaltet wird, so daß es also gerade in den für den Backvorgang wichtigen Phasen nicht zu einem Temperatureinbruch kommt.

Nachfolgend wird die Erfindung anhand eines bevorzugten Ausführungsbeispiels in Verbindung mit der Zeichnung näher erläutert. Dabei zeigen:

Fig. 1 eine perspektivische Darstellung eines Backschrankes mit geregelter Luftumwälzung und

Fig. 2 ein Diagramm zur Veranschaulichung der cos $\varphi$-Messung .

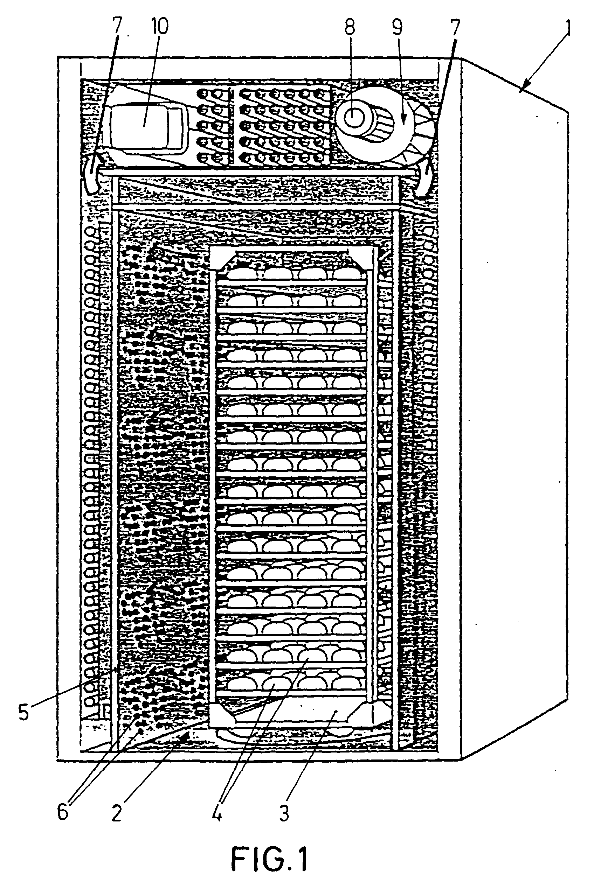

In Fig. 1 ist ein Backofen in Form eines Backschrankes 1 dargestellt bei geöffneten Backraum 2, wobei sich im Backraum 2 ein Regalwagen 3 mit Gebäckstücken 4 befindet.

Die Seitenwände 5 des Backschrankes weisen Durchbrechungen 6 zur Zu- und Abführung von Wasserdampf und Heißluft auf.

Die Umwälzung der Heißluft wird, wie durch die Pfeile 7 angedeutet, bewerkstelligt durch einen Lüfter 9 mit Elektromotor 8, wobei die Regelung des Elektromotors 8 über einen cos $\varphi$-Belastungswächter erfolgt, der im Schaltschrank eingebaut ist.

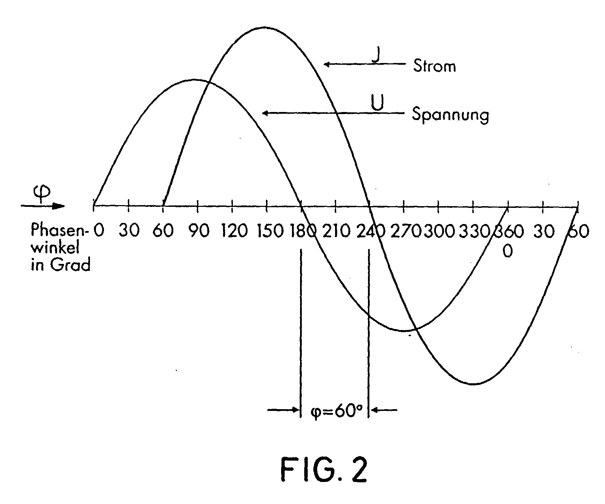

Die Funktion eines derartigen Belastungswächters wird im Zusammenhang mit Fig. 2 nachfolgend erläutert:

In Fig. 2 ist aufgetragen der Strom J und die Spannung U in Abhängigkeit von dem Phasenwinkel $\varphi$ in Grad im Elektromotor 8. Je nach dem Luftdruck in der Backkammer ändert sich die Belastung des Elektromotors 8, wobei bei induktiver Last der Strom J der Spannung U um den Phasenwinkel φ nacheilt. Sinkt die Belastung des Motors, wird der Phasenwinkel größer und damit der cos φ kleiner, wobei sich cos φ umgekehrt bei steigender Belastung vergrößert. Diese Änderung ist also ein Maß für die Belastungsänderung an der Welle des Motors und dementsprechend auch für die Druckänderung in der Backkammer.

Im Diagramm nach Fig. 2 ist die Phasenverschiebung von φ = 60%.

**Patentansprüche**

1. Backofen, insbesondere Backschrank, bei welchem im Backraum mittels eines durch einen Elektromotor angetriebenen Lüfters Luft geregelt umgewälzt wird, **dadurch gekennzeichnet, daß** die von dem Lüfter-Elektromotor (8) aufgebrachte Leistung erfaßt und zur Regelung der Luftumwälzung herangezogen wird.

2. Backofen nach Anspruch 1, **dadurch gekennzeichnet, daß** die Phasenverschiebung bzw. die Änderung der Phasenverschiebung zwischen Strom (J) und Spannung (U) des Elektromotors (8) erfaßt wird.

FIG.1

FIG. 2